# NEUE EUROPÄISCHE PATENTSCHRIFT

(11) **EP 3 175 060 B2**
(45) Veröffentlichungstag und Bekanntmachung des Hinweises auf die Entscheidung über den Einspruch: **14.08.2024**
(45) Hinweis auf die Patenterteilung: 04.07.2018
(21) Anmeldenummer: 15747137.6
(22) Anmeldetag: 29.07.2015
(51) Int. Cl.: E04G 21/04

(54) **AUTOBETONPUMPE UND VERFAHREN ZU DEREN ARBEITSBETRIEB**
TRUCK-MOUNTED CONCRETE PUMP AND METHOD FOR OPERATING SAME
POMPE À BÉTON ET PROCÉDÉ SERVANT AU FONCTIONNEMENT DE LADITE POMPE À BÉTON

(30) Priorität: 30.07.2014 DE 102014215019
(43) Veröffentlichungstag der Anmeldung: 07.06.2017
(73) Patentinhaber: Putzmeister Engineering GmbH, 72631 Aichtal (DE)
(72) Erfinder: MAYER, Martin, 72768 Reutlingen (DE); KAUPP, Jens, 72072 Tübingen (DE); JAHN, Dirk, 72622 Nürtingen (DE)
(74) Vertreter: Pfiz, Thomas
(86) Internationale Anmeldenummer: PCT/EP2015/067383
(87) Internationale Veröffentlichungsnummer: WO 2016/016305

(56) Entgegenhaltungen:
- EP-A1- 2 733 281
- EP-A2- 1 849 931
- WO-A1-2013/091538
- CN-A- 101 457 589
- CN-A- 102 588 505
- CN-A- 103 206 090
- DE-A1- 10 242 270
- DE-A1- 102006 031 257
- DE-A1- 102006 049 487
- DE-A1- 102012 106 222
- JP-A- 2002 046 998
- JP-A- 2002 046 998
- JP-A- 2003 155 759
- JP-A- 2013 091 937
- JP-A- H11 268 897
- JP-A- H11 301 994
- JP-A- S4 854 342
- US-A1- 2008 217 279

## Beschreibung

Die Erfindung betrifft ein Verfahren zum Arbeitsbetrieb einer Autobetonpumpe, auf deren Fahrgestell ein aus mehreren schwenkbaren Mastarmen gebildeter Betonverteilermast an einem Drehwerk drehbar angeordnet ist.

Derartige Autobetonpumpen werden auf Baustellen eingesetzt, um Beton vom Pumpsystem über einen Betonverteilermast gezielt zu variablen Verarbeitungsorten zu fördern, wobei die Mastarme über Schwenkantriebe in der Regel ferngesteuert bewegt werden. Um die erforderliche Standsicherheit zu gewährleisten, müssen die Maschinen im Arbeits- bzw. Pumpbetrieb abgestützt werden. Dabei kann es vorkommen, dass die Umgebung an der Baustelle eine Neigung von 3° und mehr aufweist. Die Maschinen sind derzeit so ausgelegt, dass eine Maschinenneigung von maximal 3° zugelassen ist. Größere Schrägstellungen überlasten u.a. das Drehwerk des Verteilermasts und bergen eine Unfallgefahr. Insbesondere besteht die Gefahr, dass Stabilitäts- und Standsicherheitsgrenzen überschritten werden. Die Schrägstellung kann über eine so genannte Libelle als Neigungsmesser vom Bediener visuell kontrolliert werden. Gegebenenfalls müssen zusätzliche Maßnahmen ergriffen werden. Das Dokument EP2733281 A1 offenbart ein Verfahren und eine Autobetonpumpe gemäß dem einleitenden Teil des Anspruchs 1.

Ausgehend hiervon liegt der Erfindung die Aufgabe zugrunde, die im Stand der Technik bekannten Vorrichtungen und Verfahren weiter zu verbessern und eine erweiterte Einsatzmöglichkeit bei reduziertem Sicherheitsrisiko zu schaffen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, die Schrägstellung am Arbeitsort sensorisch zu erfassen und den Bediener beim Betrieb der Maschine durch eine programmgesteuerte Beschränkung des Arbeitsbereichs zu unterstützen. Dementsprechend wird in verfahrensmäßiger Hinsicht vorgeschlagen, dass die Schrägstellung der Autobetonpumpe am Arbeitsort ermittelt wird, und dass der Arbeitsbereich des Betonverteilermasts durch Begrenzung der Drehbewegung an dem Drehwerk und/oder der Schwenkbewegung wenigstens eines Mastarms in Abhängigkeit von der Schrägstellung beschränkt wird. Dadurch ist ein sicherer Betrieb auch bei größeren Geländeneigungen möglich, ohne dass der Benutzer eigenmächtig in das System eingreifen und komplexe Betriebsbedingungen berücksichtigen muss.

Vorteilhafterweise wird der Arbeitsbereich in Abhängigkeit von der durch die Bewegung des Betonverteilermasts veränderlichen Schwerpunktlage der Autobetonpumpe beschränkt, derart, dass der Schwerpunkt innerhalb der Kippgrenzen der Autobetonpumpe bleibt. Erfindungsgemäß, wird der Arbeitsbereich zur Vermeidung einer Überbeanspruchung von Komponenten bzw. einer Überlastung von Bauteilen der Autobetonpumpe beschränkt. Hierbei kann die Schrägstellung des Drehwerks oder die Neigung von Stützbeinen innerhalb definierter Grenzen berücksichtigt werden. Das Fahrgestell wird über mindestens drei, vorzugsweise vier Stützausleger abgestützt. Vorzugsweise, wird der Arbeitsbereich nach Maßgabe der Abstützkonfiguration beschränkt. Dabei kann die Abstützkonfiguration anhand von variablen oder festgelegten Stützbeinstellungen (z.B. Vollabstützung oder Schmalabstützung) unter Berücksichtigung des Neigungsgrades einbezogen werden, wobei auch eine Belastungsgrenze der Stützbeine z.B. durch Hangabtriebskräfte berücksichtigt werden kann.

Vorteilhaft ist es auch, wenn die ermittelte Schrägstellung der Autobetonpumpe mit einem vorgegebenen Grenzwert verglichen wird, und wenn der Arbeitsbereich erst bei Überschreitung des beispielsweise auf 3° festgelegten Grenzwerts beschränkt wird.

Um eine automatische Steuerung zu ermöglichen, ist es günstig, wenn die Schrägstellung der Autobetonpumpe mittels eines fahrzeugfesten Neigungssensors erfasst wird. Dabei kann die Neigung der Fahrzeughochachse der Autobetonpumpe relativ zur Schwerkraftachse bzw. zum Horizont und/oder zur Geländefläche am Arbeitsort sensorisch erfasst werden.

Zur Erfassung von Steuerungsparametern mit möglichst geringem apparativen Aufwand ist es vorteilhaft, wenn mittels eines einzelnen Neigungssensors jeweils ein Neigungswinkel der Autobetonpumpe vor und nach dem Abstützen am Arbeitsort erfasst wird. Damit kann die Geländeneigung und die je nach Abstützstellung davon abweichende Schrägstellung der Maschine im Raum in die Berechnung des zulässigen Arbeitsbereichs einbezogen werden.

Als allgemeines Steuerungsprinzip ist es gemäß der Erfindung vorgesehen, dass die horizontale Reichweite des Betonverteilermasts mit zunehmender Schrägstellung der Autobetonpumpe zunehmend begrenzt wird, so dass die nötige Standsicherheit stets gewährleistet bleibt bzw. Bauteile nicht überbeansprucht werden.

Eine besonders einfache und auch für den Bediener unkomplizierte Variante sieht vor, dass der Arbeitsbereich des Betonverteilermasts beschränkt wird, indem die Schwenkstellung des ersten Mastarms an dem Drehwerk auf einen vorgegebenen Winkel festgelegt wird. Alternativ ist es auch möglich, dass der Arbeitsbereich des Betonverteilermasts beschränkt wird, indem der Schwenkbereich des ersten Mastarms zur Horizontale hin begrenzt wird. Gemäß einer weiteren vorteilhaften Ausgestaltung wird die Orientierung der Autobetonpumpe zur Schwerkraftachse im Raum bzw. die Schrägstellung der Autobetonpumpe im Raum erfasst, und es wird der Arbeitsbereich des Betonverteilermasts orientierungsabhängig bzw. abhängig von der Schrägstellung im Raum insbesondere durch Begrenzung des Drehbereichs am Drehwerk beschränkt.

Für eine verbesserte Mensch-Maschine-Interaktion ist es auch günstig, wenn die momentan mögliche Reichweite des Betonverteilermasts einem Bediener über ein Anzeigegerät angezeigt wird.

Als zusätzliches Sicherheitsmerkmal ist es vorteilhaft, wenn die Bewegung des Betonverteilermasts bei Erreichen einer Grenze des Arbeitsbereichs automatisch gestoppt wird.
- Fig. 1: eine perspektivische Darstellung einer Autobetonpumpe in Schrägstellung mit eingeschränktem Arbeitsbereich des Betonverteilermasts,
- Fig. 2: eine Abstützkonfiguration einer Autobetonpumpe in schematischer Draufsicht;
- Fig. 3 und 4: eine Seitenansicht einer Autobetonpumpe in geneigtem Gelände in Fahr- und Arbeitsstellung.

Denkbar ist es auch, dass die Geschwindigkeiten und/oder Beschleunigungen bei der Bewegung des Drehwerks oder der Mastarme in Abhängigkeit von der Schrägstellung beschränkt und somit Überbeanspruchungen bzw. zusätzliche Kippmomente vermieden werden.
Im Folgenden wird die Erfindung anhand der in der Zeichnung schematisch dargestellten Ausführungsbeispiele näher erläutert. Es zeigen:

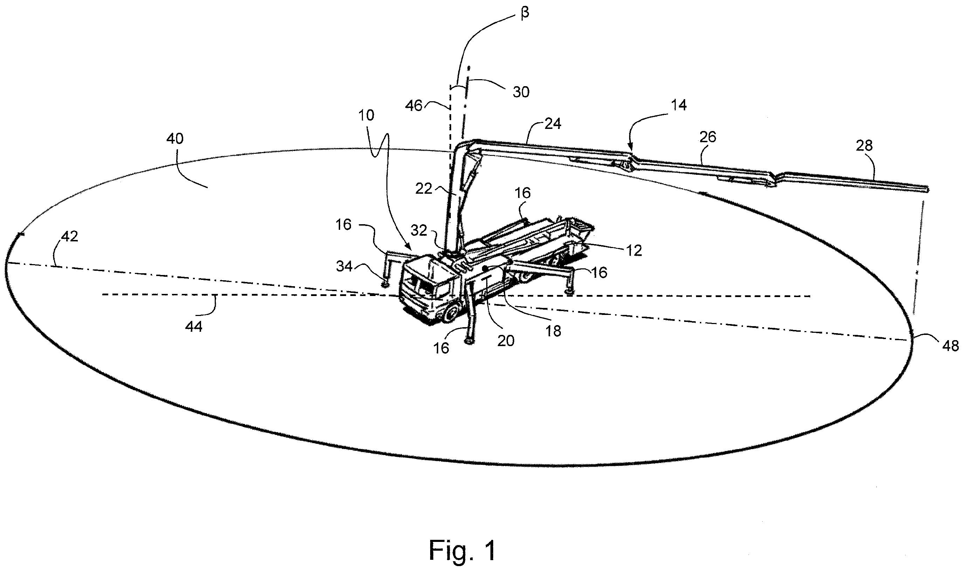

Die in Fig. 1 gezeigte Autobetonpumpe 10 umfasst ein Fahrzeug mit Fahrgestell 12, einen darauf angeordneten, als Träger für eine Betonförderleitung dienenden vierarmigen Betonverteilermast 14, vier seitlich ausstellbare Stützausleger 16 zur Abstützung im Arbeitsbetrieb und eine mit mindestens einem Neigungssensor 18 gekoppelte computergestützte Sicherheitseinrichtung 20 zur Beschränkung des Arbeitsbereichs des Betonverteilermasts 14 in Abhängigkeit von einer Fahrzeug-Schräg¬stellung.

Der Betonverteilermast 14 weist als Knickgelenkausleger bei dem gezeigten Ausführungsbeispiel vier Mastarme 22,24,26,28 auf. Der erste Mastarm 22 ist dabei mit einem Ende an einem durch Ansteuerung eines Drehantriebs um eine Hochachse 30 des Fahrgestells 12 verdrehbaren Mastbock bzw. Drehwerk 32 angelenkt. Im Übrigen sind die Mastarme 22,24,26,28 durch zugeordnete Schwenkantriebe gegenüber dem Drehwerk 32 und gegenüber je einem benachbarten Mastarm um horizontale Achsen verschwenkbar. Der letzte Mastarm 28 trägt an seinem freien Ende einen Endschlauch der nicht eigens dargestellten Betonförderleitung.

Die vorderen Stützausleger 16 sind von einer eingezogenen Fahrstellung in eine ausgefahrene, schräg nach vorne weisende Abstützstellung teleskopierbar. Die beiden rückwärtigen Stützausleger sind von einer parallel zum Fahrgestell ausgerichteten Fahrstellung in eine schräg nach hinten weisende Abstützstellung verschwenkbar. Alle Stützausleger 16 besitzen ein teleskopierbares Stützbein 34, mit dem sie auf einem Untergrund unter Anheben des Fahrgestells 12 abstützbar sind. Die Stützausleger 16 können je nach Platzbedarf am Arbeitsort bzw. an der Baustelle wahlweise unter Bildung verschiedener Ausstellkonfigurationen in einer inneren, fahrgestellnahen oder einer äußeren, fahrgestellfernen Abstützstellung mit ihren Stützbeinen 34 am Untergrund abgestützt werden.

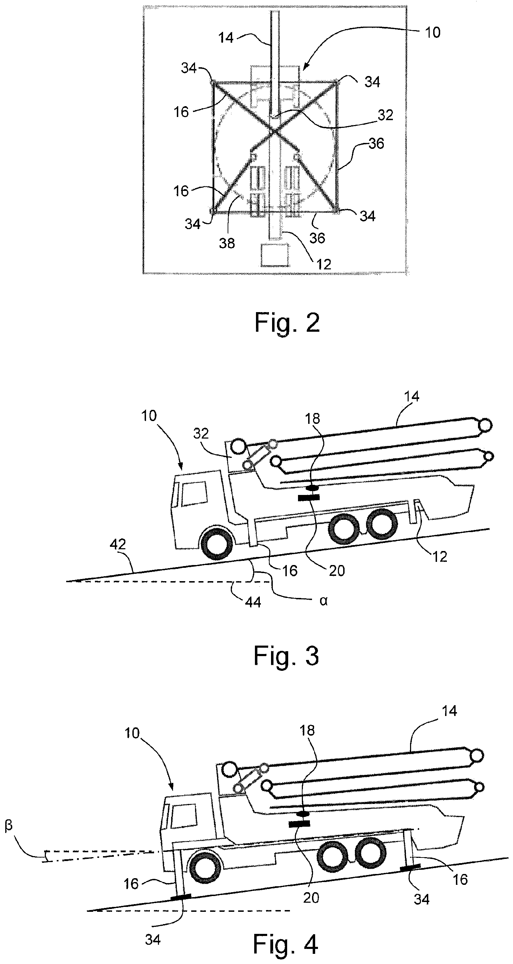

Wie in Fig. 2 veranschaulicht, werden durch die Position der Stützbeine 34 die Kippkanten 36 der Autobetonpumpe 10 definiert. Damit die Maschine sicher steht, muss sich der Schwerpunkt immer innerhalb der Kippkanten 36 befinden, wie es für eine mögliche Schwerpunktlinie 38 bei einer 360°-Drehung des Betonverteilermasts 14 gezeigt ist.

Demnach ist bei einer Fahrzeug-Schrägstellung außerhalb eines Schrägstellungsbereichs von beispielsweise maximal 3° die Standsicherheit gefährdet. Hinzu kommt, dass durch die bei einer Schrägstellung richtungsabhängig auftretenden Belastungen die Stützbeine 34 und das Drehwerk 32 überbeansprucht werden können.

Fig. 1 zeigt den Fall, dass das Gelände 40 am Arbeitsort eine Geländeneigung 42 gegenüber der Horizontalen 44 aufweist, so dass im Arbeitsbetrieb die Hochachse 30 von der Schwerkraftachse 46 (Normale zur Horizontalen) um einen Winkel β von beispielsweise 5° abweicht. In diesem Fall wird der Arbeitsbereich 48 des Betonverteilermasts 14 durch die elektronische Sicherheitseinrichtung 20 geeignet beschränkt, um die erforderliche Standsicherheit zu gewährleisten und Überbeanspruchungen zu vermeiden. Dies erfolgt durch eine Begrenzung der Drehbewegung an dem Drehwerk 32 und/oder der Schwenkbewegung wenigstens eines Mastarms in Abhängigkeit von der Schrägstellung der Autobetonpumpe 10.

Zweckmäßig wird diese Schrägstellung mittels des fahrzeugfesten Neigungssensors 18 richtungsabhängig im Raum erfasst, so dass nicht nur der absolute Neigungswinkel β, sondern auch der Horizontalwinkel der größten Fahrzeugneigung gegenüber einer Nullstellung des Drehwerks 32 beispielsweise in Fahrzeuglängsrichtung bekannt ist.

Um die nötige Standsicherheit zu gewährleisten, können mittels einer Software der Sicherheitseinrichtung 20 verschiedene Strategien der Mastbewegung bestimmt werden. Erfindungsgemäß wird die horizontale Reichweite des Betonverteilermasts 14 mit zunehmender Schrägstellung der Autobetonpumpe 10 zunehmend begrenzt. Grundsätzlich könnte es auch schon ausreichen, die Beschleunigungen oder den Ruck (zeitliche Ableitung der Beschleunigung) zu begrenzen.

Eine besonders einfache Steuerungsroutine sieht vor, dass der Arbeitsbereich 48 beschränkt wird, indem die Schwenkstellung des ersten Mastarms 22 an dem Drehwerk 32 auf einen vorgegebenen Winkel - beispielsweise 90° wie in Fig. 1 gezeigt - festgelegt wird, während die restlichen Mastarme 24,26,28 frei beweglich bleiben. Dies hat den Vorteil, dass der Bediener die Reichweite des Armpakets noch visuell einfach feststellen kann.

Alternativ ist es auch möglich, dass der Schwenkbereich des ersten Mastarms 22 zur Horizontale hin begrenzt wird (z.B. zwischen 90° und 45°), so dass ein in Abhängigkeit von der Schrägstellung und der Abstützkonfiguration festgelegter Grenzwinkel nicht unterschritten wird.

Eine weitere Ausgestaltung der Sicherheitseinrichtung 20 sieht eine Einschränkung des Drehbereichs des Betonverteilermasts 14 am Drehwerk 32 vor. Wie bereits erwähnt, kann ein mehrachsiger Neigungssensor 18 die Schrägstellung der Maschine zur Schwerkraftachse im Raum erfassen. Entsprechend kann der Drehbereich des Masts 14 eingeschränkt werden, z.B. bei Hanglange ein Winkelbereichssegment hangabwärts ausgegrenzt werden (Begrenzung des maximalen Winkels zur schiefen Ebene bzw. zur Hangabtriebskraftachse). Diese Ausprägung kann auch in Kombination mit den anderen Möglichkeiten zum Einsatz kommen.

Anhand von Fig. 4 und 5 wird im Folgenden ein möglicher Verfahrensablauf erläutert. Der Bediener stellt die Autobetonpumpe 10 an einem Arbeitsort ab, an dem das Gelände eine Neigung von mehr als 3° aufweist. Die Geländeneigung α wird bei noch eingefahrenen Stützauslegern 16 über den fahrgestellfesten Neigungssensor 18 erfasst (Fig. 3). Sodann wird die Abstützkonfiguration eingenommen, wobei die Stützbeine 34 zur Verringerung der Neigung unterschiedlich weit ausgefahren werden. Auch dadurch ist es im gegebenen Fall nicht möglich, die Maschine in einem 3°-Schrägstellungs¬bereich abzustützen, wenngleich der Schrägstellungswinkel β kleiner als der Geländeneigungswinkel α ist.

Die erhöhte Schrägstellung kann dem Bediener über ein Anzeigesystem z.B. auf einer Funkfernsteuerung für den Verteilermast 14 angezeigt werden. Die Sicherheitseinrichtung 20 bestimmt nach Maßgabe der Schrägstellung, welche Möglichkeiten der Bediener für den Betrieb des Verteilermasts 14 hat. Z.B. kann nun der Arbeitsbereich 48 ausgehend von der Abstützkonfiguration angepasst werden. Bei Vollabstützung kann der komplette Drehbereich des Drehwerks zugelassen sein, während bei Schmalabstützung ein eingeschränkter Schwenkbereich freigegeben wird. Die horizontale Reichweite des Armpakets wird z.B. abhängig von der Schrägstellung beschränkt (Reduzierung des Kippmomentes der Maschine /Autobetonpumpe 10 bzw. Verringerung der Belastung auf Bauteile). Je größer die Schrägstellung ist, umso mehr wird die horizontale Reichweite eingeschränkt.

Anhand von z.B. Neigungs- oder Winkel-Sensoren an den einzelnen Mastarmen kann die horizontale Position des Endschlauchs durch die Sicherheitseinrichtung 20 ermittelt werden. Die möglichen Reichweiten können dem Bediener über ein Anzeigegerät angezeigt werden. Bewegt der Bediener den Verteilermast 14 in einen durch die Sicherheitseinrichtung 20 ermittelten Grenzbereich, so wird die Mastbewegung automatisch gestoppt. Ein Hinweis für den Bediener kann auf dem Anzeigegerät erfolgen. Der Bediener kann das Armpaket wieder aus dem Grenzbereich heraus bewegen. Optional kann der Bediener vor dem Erreichen des Grenzbereichs bereits durch einen Hinweis informiert werden. Der Hinweis kann visuell, haptisch oder akustisch erfolgen.

Im Folgenden wird die Erfindung anhand der in der Zeichnung schematisch dargestellten Ausführungsbeispiele näher erläutert. Es zeigen:

## Patentansprüche

1. Verfahren zum Arbeitsbetrieb einer Autobetonpumpe (10), auf deren Fahrgestell (12) ein aus mehreren schwenkbaren Mastarmen (22,24,26,28) gebildeter Betonverteilermast (14) an einem Drehwerk (32) drehbar angeordnet ist, mit folgenden Schritten:
a) Abstützen des Fahrgestells (12) über mindestens drei vorzugsweise vier Stützausleger (16),
b) Ermitteln der Schrägstellung der Autobetonpumpe (10) am Arbeitsort,
c) Beschränken des Arbeitsbereichs (48) des Betonverteilermasts (14) durch Begrenzung der Drehbewegung an dem Drehwerk (32) und/oder der Schwenkbewegung wenigstens eines Mastarms (22,24,26,28) in Abhängigkeit von der Schrägstellung, wobei die horizontale Reichweite des Betonverteilermasts (14) mit zunehmender Schrägstellung der Autobetonpumpe (10) zunehmend begrenzt wird,
d) wobei zur Vermeidung einer Überbeanspruchung von Komponenten der Autobetonpumpe die Neigung der Stützbeine der Stützausleger (16) innerhalb definierter Grenzen berücksichtigt wird.

2. Verfahren nach Anspruch 1, **dadurch gekennzeichnet, dass** der Arbeitsbereich (48) nach Maßgabe der durch die Bewegung des Betonverteilermasts (14) veränderlichen Schwerpunktlage der Autobetonpumpe (10) beschränkt wird, so dass der Schwerpunkt innerhalb der Kippgrenzen (36) der Autobetonpumpe (10) bleibt.

3. Verfahren nach Anspruch 1 oder 2, **dadurch gekennzeichnet, dass** der Arbeitsbereich (48) nach Maßgabe der Abstützkonfiguration der Stützausleger (16) beschränkt wird.

4. Verfahren nach einem der Ansprüche 1 bis 3, **dadurch gekennzeichnet, dass** die ermittelte Schrägstellung der Autobetonpumpe (10) mit einem vorgegebenen Grenzwert verglichen wird, und dass der Arbeitsbereich (48) bei Grenzwertüberschreitung beschränkt wird.

5. Verfahren nach einem der Ansprüche 1 bis 4, **dadurch gekennzeichnet, dass** die Schrägstellung der Autobetonpumpe (10) mittels eines fahrzeugfesten Neigungssensors (18) erfasst wird.

6. Verfahren nach einem der Ansprüche 1 bis 5, **dadurch gekennzeichnet, dass** die Neigung der Fahrzeughochachse der Autobetonpumpe (10) relativ zur Schwerkraftachse (46) und/oder zur Geländefläche (40) am Arbeitsort erfasst wird.

7. Verfahren nach einem der Ansprüche 1 bis 6, **dadurch gekennzeichnet, dass** mittels eines einzelnen Neigungssensors (18) jeweils ein Neigungswinkel der Autobetonpumpe (10) vor und nach dem Abstützen am Arbeitsort erfasst wird.

8. Verfahren nach einem der Ansprüche 1 bis 7, **dadurch gekennzeichnet, dass** der Arbeitsbereich (48) des Betonverteilermasts (14) beschränkt wird, indem die Schwenkstellung des ersten Mastarms (22) an dem Drehwerk (32) auf einen vorgegebenen Winkel festgelegt wird.

9. Verfahren nach einem der Ansprüche 1 bis 8, **dadurch gekennzeichnet, dass** der Arbeitsbereich (48) des Betonverteilermasts (14) beschränkt wird, indem der Schwenkbereich des ersten Mastarms (22) zur Horizontalen hin begrenzt wird.

10. Verfahren nach einem der Ansprüche 1 bis 9, **dadurch gekennzeichnet, dass** die Orientierung der Autobetonpumpe (10) im Raum erfasst wird, und dass der Arbeitsbereich (48) des Betonverteilermasts (14) orientierungsabhängig insbesondere durch Begrenzung des Drehbereichs am Drehwerk (32) beschränkt wird.

11. Verfahren nach einem der Ansprüche 1 bis 10, **dadurch gekennzeichnet, dass** die momentan mögliche Reichweite des Betonverteilermasts (14) einem Bediener über ein Anzeigegerät angezeigt wird.

12. Verfahren nach einem der Ansprüche 1 bis 11, **dadurch gekennzeichnet, dass** die Bewegung des Betonverteilermasts (14) bei Erreichen einer Grenze des Arbeitsbereichs (48) automatisch gestoppt wird.

13. Verfahren nach einem der Ansprüche 1 bis 12, **dadurch gekennzeichnet, dass** die Geschwindigkeiten und/oder Beschleunigungen bei der Bewegung des Drehwerks (32) oder der Mastarme (22,24,26,28) in Abhängigkeit von der Schrägstellung beschränkt werden.

## Claims

1. A method for operating a truck-mounted concrete pump (10) on the chassis (12) of which a concrete-distributing boom (14), consisting of a plurality of swivelable boom arms (22, 24, 26, 28), is arranged rotatably on a slewing gear (32), comprising the following steps:
a) supporting the chassis (12) by means of at least three, preferably four extendable support arms (16),
b) determining the inclination of the truck-mounted concrete pump (10) at the work location,
c) restricting the operating range (48) of the concrete-distributing boom (14) by limiting the rotational movement at the slewing gear (32) and/or the swiveling movement of at least one boom arm (22,24,26,28) as a function of the inclination, wherein the horizontal reach of the concrete-distributing boom (14) is limited increasingly with increasing inclination of the truck-mounted concrete pump (10),
d) the slant of the support legs of the extendable support arms (16) is taken into account within defined limits in order to avoid overstressing of components of the truck-mounted concrete pump.

2. The method as claimed in claim 1, **characterized in that** the operating range (48) is restricted according to the varying position of the center of gravity of the truck-mounted concrete pump (10) resulting from the movement of the concrete-distributing boom (14), in such a way that the center of gravity remains within the tipping limits (36) of the truck-mounted concrete pump (10).

3. The method as claimed in claim 1 or 2, **characterized in that** the operating range (48) is restricted according to the support configuration of the extendable support arms (16).

4. The method as claimed in any one of claims 1 to 3, **characterized in that** the detected inclination of the truck-mounted concrete pump (10) is compared to a predetermined limit value, and **in that** the operating range (48) is restricted upon exceeding of the limit value.

5. The method as claimed in any one of claims 1 to 4, **characterized in that** the inclination of the truck-mounted concrete pump (10) is detected by means of a vehicle-mounted tilt sensor (18).

6. The method as claimed in any one of claims 1 to 5, **characterized in that** the tilt of the vehicle vertical axis of the truck-mounted concrete pump (10) relative to the axis of gravity (46) and/or to the terrain surface (40) at the work location is detected.

7. The method as claimed in any one of claims 1 to 6, **characterized in that** a tilt angle of the truck-mounted concrete pump (10) is detected by means of a single tilt sensor (18) both before and after the vehicle has been supported at the work location.

8. The method as claimed in any one of claims 1 to 7, **characterized in that** the operating range (48) of the concrete-distributing boom (14) is restricted by setting the swiveled position of the first boom arm (22) on the slewing gear (32) at a predetermined angle.

9. The method as claimed in any one of claims 1 to 8, **characterized in that** the operating range (48) of the concrete-distributing boom (14) is restricted by limiting the swiveling range of the first boom arm (22) with respect to the horizontal.

10. The method as claimed in any one of claims 1 to 9, **characterized in that** the three-dimensional orientation of the truck-mounted concrete pump (10) is detected, and **in that** the operating range (48) of the concrete-distributing boom (14) is restricted in an orientation-dependent manner, in particular by limiting the rotational range at the slewing gear (32).

11. The method as claimed in any one of claims 1 to 10, **characterized in that** the instantaneously possible reach of the concrete-distributing boom (14) is displayed to an operator via a display device.

12. The method as claimed in any one of claims 1 to 11, **characterized in that** the movement of the concrete-distributing boom (14) is stopped automatically upon reaching a limit of the operating range (48).

13. The method as claimed in any one of claims 1 to 12, **characterized in that** the velocities and/or accelerations of the movement of the slewing gear (32) or of the boom arms (22,24,26,28) are restricted as a function of the inclination.

## Revendications

1. Procédé de fonctionnement d'une pompe à béton automobile (10) sur le châssis (12) de laquelle est monté à rotation, sur un mécanisme de rotation (32), un mât distributeur de béton (14) formé de plusieurs bras de mât (22, 24, 26, 28), comprenant les étapes suivantes :
a) stabilisation du châssis (12) au moyen de trois, de préférence quatre bras stabilisateurs (16),
b) détermination de l'inclinaison de la pompe à béton (10) sur le lieu de travail,
c) limitation de la zone de travail (48) du mât distributeur de béton (14) en limitant le mouvement rotatif sur le mécanisme de rotation (32) et/ou le mouvement pivotant d'au moins un bras de mât (22, 24, 26, 28) en fonction de l'inclinaison, la portée horizontale du mât distributeur de béton (14) est de plus en plus limitée à mesure que l'inclinaison de la pompe à béton (10) augmente,
d) pour éviter une surcharge de composants de la pompe à béton automobile, il est tenu compte de l'inclinaison des béquilles des bras stabilisateurs (16) dans des limites définies.

2. Procédé selon la revendication 1, **caractérisé en ce que** la zone de travail (48) est limitée suivant la position du centre de gravité, variable par le mouvement du mât distributeur de béton (14), de sorte que le centre de gravité demeure dans les limites de basculement (36) de la pompe à béton (10).

3. Procédé selon la revendication 1 ou 2, **caractérisé en ce que** la zone de travail (48) est limitée suivant la configuration de stabilisation des bras stabilisateurs (16).

4. Procédé selon l'une des revendications 1 à 3, **caractérisé en ce que** l'inclinaison déterminée de la pompe à béton (10) est comparée à une valeur limite prédéterminée, et **en ce que** la zone de travail (48) est limitée en cas de dépassement de la valeur limite.

5. Procédé selon l'une des revendications 1 à 4, **caractérisé en ce que** l'inclinaison de la pompe à béton (10) est détectée au moyen d'un capteur d'inclinaison (18) solidaire du véhicule.

6. Procédé selon l'une des revendications 1 à 5, **caractérisé en ce que** l'inclinaison de l'axe normal de véhicule de la pompe à béton (10) est détectée par rapport à l'axe de gravité (46) et/ou à la surface du terrain (40) sur le lieu du travail.

7. Procédé selon l'une des revendications 1 à 6, **caractérisé en ce qu'**au moyen d'un seul capteur d'inclinaison (18), un angle d'inclinaison respectif de la pompe à béton (10) est détecté avant et après la stabilisation.

8. Procédé selon l'une des revendications 1 à 7, **caractérisé en ce que** la zone de travail (48) du mât distributeur de béton (14) est limitée en définissant la position de pivotement du premier bras de mât (22) sur le mécanisme de rotation (32) selon un angle prédéterminé.

9. Procédé selon l'une des revendications 1 à 8, **caractérisé en ce que** la zone de travail (48) du mât distributeur de béton (14) est limitée en limitant la plage de pivotement du premier bras de mât (22) en direction de l'horizontale.

10. Procédé selon l'une des revendications 1 à 9, **caractérisé en ce que** l'orientation de la pompe à béton (10) dans l'espace est détectée, et **en ce que** la zone de travail (48) du mât distributeur de béton (14) est limitée en fonction de l'orientation, en particulier en limitant la plage de rotation sur le mécanisme de rotation (32).

11. Procédé selon l'une des revendications 1 à 10, **caractérisé en ce que** la portée momentanément possible du mât distributeur de béton (14) est indiquée à un utilisateur par un appareil d'affichage.

12. Procédé selon l'une des revendications 1 à 11, **caractérisé en ce que** le mouvement du mât distributeur de béton (14) est automatiquement stoppé lorsqu'une limite de la zone de travail (48) est atteinte.

13. Procédé selon l'une des revendications 1 à 12, **caractérisé en ce que** les vitesses et/ou accélérations pendant le mouvement du mécanisme de rotation (32) et des bras de mât (22, 24, 26, 28) sont limitées en fonction de l'inclinaison.
